# EUROPÄISCHE PATENTSCHRIFT

(11) **EP 4 122 899 B1**
(45) Veröffentlichungstag und Bekanntmachung des Hinweises auf die Patenterteilung: **06.08.2025**
(21) Anmeldenummer: 22182270.3
(22) Anmeldetag: 30.06.2022
(51) Int. Cl.: C04B 20/10, C04B 41/53, C04B 28/02, C04B 111/20, C04B 111/00

(54) **SCHICHTFÖRMIGES OBERFLÄCHENSCHUTZSYSTEM**
LAYERED SURFACE PROTECTION SYSTEM
SYSTÈME EN COUCHES DE PROTECTION DE SURFACE

(30) Priorität: 22.07.2021 DE 102021119002; 22.07.2021 DE 202021103918 U
(43) Veröffentlichungstag der Anmeldung: 25.01.2023
(73) Patentinhaber: Solidian GmbH, 72458 Albstadt (DE)
(72) Erfinder: Hinzen, Dr., Marcus, 72458 Albstadt (DE)
(74) Vertreter: Weber, Jan Thorsten

(56) Entgegenhaltungen:
- WO-A1-2016/010434
- DE-A1- 102012 106 083
- JP-A- 2018 104 608

## Beschreibung

Es ist seit vielen Jahren bekannt Betonbauteile, insbesondere Betonbauteile mit einer Stahlbewehrung, in Bauwerken (u.a. Gebäude, Brücken, Straßen) einzusetzen. Mit zunehmendem Alter der Bauwerke haben diese Betonbauteile allerdings den Nachteil, dass sich im Beton Risse bilden und Wasser, bzw. Feuchtigkeit bis zu der Stahlbewehrung durchdringen kann. Die Stahlbewehrung korrodiert in der Folge und die Tragfähigkeit des Betonbauteils nimmt ab. Besonders stark tritt dieses Problem bei Betonbauteilen auf, die bedingt durch ihren Einsatzort korrosiven Medien (z.B. Chloride, Salzwasser) ausgesetzt sind. Ein Beispiel hierfür sind befahrbare Oberflächen (Fahrbahnbeläge) von Straßen oder Tiefgaragen aus einem Betonbauteil, die besonders im Winter bei Temperaturen unter dem Gefrierpunkt einem erhöhten Eintrag an Tausalzen ausgesetzt sind. Zusätzlich sind Fahrbahnbeläge aufgrund der dynamischen Belastung durch die Fahrzeuge - zum Beispiel Bremsen und Beschleunigen - hohen mechanischen Belastungen ausgesetzt, was ihre Anfälligkeit für Risse erhöht. Um die Stahlbewehrung in Betonbauteilen vor Korrosion zu schützen, sind daher bereits eine Vielzahl von Oberflächenschutzsystemen bekannt. Der Deutsche Ausschuss für Stahlbeton (DAfStb) stellt mit seiner Richtlinie "Schutz und Instandsetzung von Betonbauteilen" einen Ansatz bereit, um Oberflächenschutzsysteme in Schutzklassen einzuteilen. Bodenplatten aus Stahlbeton in Tiefgaragen werden zum Beispiel üblicherweise mit Oberflächenschutzsystemen der Schutzklassen OS 8 oder OS 11 ausgestattet. Oberflächenschutzsysteme der Schutzklasse OS 8 sind sehr fest und können hohen mechanischen Belastungen standhalten, aber sie sind anfällig für Rissbildung und können Risse nicht überbrücken. Bekannte Oberflächenschutzsysteme der Schutzklasse OS 11 hingegen können auftretende Risse im Betonbauteil durch eine weiche Schwimmschicht zwar überbrücken, aber sie altern unter starken mechanischen Belastungen - z.B. beim Einsatz auf einer Fahrbahn - und müssen verschleißbedingt in regelmäßigen Abständen ersetzt werden. Neben Oberflächenschutzsystemen sind auch Betonbauteile bekannt, die im Beton gleichmäßig verteilte Dichtmittel aufweisen, welche bei Kontakt mit Wasser eine dichtende Wirkung haben. Sie verschließen entstehende Risse im Beton direkt nach der Rissbildung durch Volumenzunahme. Mit derartigen Dichtmitteln soll Korrosion verhindert werden, indem die Stahlbewehrung des Stahlbetonbauteils nicht mit Wasser in Kontakt kommt. Ein Nachteil dieser Dichtmittel ist allerdings, dass sie nur kleine Rissbreiten verschließen können. Dabei sind in der Fachwelt die Aussagen darüber, bis zu welcher Rissbreite Risse noch mit einem derartigen Dichtmittel verschlossen werden können, unterschiedlich. Zumeist ist aber von einer Rissbreite von 0,3 bis 0,5 mm zu lesen, die maximal noch verschlossen werden kann (vgl. "A Review of Self-Healing for Damage Management of Structures", De Belie et al., Advanced Material Interfaces, Mai 2018). Die Dichtmittel können die Lebensdauer von mechanisch stark beanspruchten oder befahrenen Betonbauteilen zwar verlängern, verhindern aber nicht die Korrosion der Stahlbewehrung durch Risse mit größeren Rissbreiten (> 0,5 mm).

In der WO2016010434A1 ist ein selbstheilender Beton mit einem Dichtmittel, dass Risse im Beton verschließen können soll, beschrieben. Als Dichtmittel werden Bakterien eingesetzt, die durch den Abbau biologisch abbaubarer polymerer Verstärkungsfasern, die dem Beton beigemengt werden, unter Volumenzunahme ein Füllmaterial produzieren können. Mit dem Füllmaterial sollen im Beton auftretende Risse geschlossen werden.

Die AT521434B1 zeigt einen Fahrbahnbelag aus Beton, der ein kristallbildendes Dichtmittel enthält, welches bei Kontakt mit Wasser unter Volumenzuwachs kristallisiert. Auf diese Weise sollen Risse und Hohlräume im Beton verschlossen werden. Es wird vorgeschlagen dem Beton ebenfalls Glas-Composite Fasern mit einer Länge von 43 mm beizumengen, um ein erneutes Öffnen bereits verschlossener Risse zu vermeiden.

Die Aufgabe der Erfindung ist es daher, ein schichtförmiges Oberflächenschutzsystem, ein bewehrtes Betonbauteil und ein Verfahren zum Aufbringen eines schichtförmigen Oberflächenschutzsystems für mechanisch stark belastbare und befahrbare Oberflächen anzugeben, das auftretende Risse selbst heilen kann und im Vergleich zum Stand der Technik eine geringere Schichtdicke und einen geringeren Materialeinsatz bei vergleichbarer Schutzwirkung ermöglicht.

Die Aufgabe wird gelöst durch ein Oberflächenschutzsystem mit den Merkmalen des Anspruches 1. Ein schichtförmiges Oberflächenschutzsystem zum Schutz von Stahlbetonbauteilen vor eindringenden Flüssigkeiten und Chloriden mit folgenden Inhaltsstoffen:
- einem Matrixmaterial - wie Beton oder Mörtel -, das vorzugsweise mineralische Stoffe umfasst,
- zumindest einem Dichtmittel, das zumindest in einem Teilvolumen des Oberflächenschutzsystems enthalten ist,
- wobei das zumindest eine Dichtmittel derart beschaffen ist, dass es bei Kontakt mit typischen Umgebungsstoffen wie Wasser und/oder Luft das Festkörpervolumen des schichtförmigen Oberflächenschutzsystems steigert (dadurch können Risse im schichtförmigen Oberflächenschutzsystem verschlossen bzw. geheilt werden),
- und wobei das schichtförmige Oberflächenschutzsystem sich vorwiegend in einer ersten Haupterstreckungsrichtung und einer zweiten Haupterstreckungsrichtung, die senkrecht zueinander und parallel zu einer zu schützenden Oberfläche verlaufen, erstreckt, weist erfindungsgemäß zusätzlich ein Bewehrungssystem auf, das Langfasern umfasst, welche eine Länge von zumindest 100 mm, vorzugsweise jedoch von zumindest 200 mm, aufweisen, wobei das Bewehrungssystem von dem Matrixmaterial umschlossen ist. Langfasern im Sinne dieser Schutzrechtsanmeldung können Fasern jeglicher Art (z.B. Glasfasern, Kohlenstofffasern, Aramidfasern, Naturfasern, etc.) sein, die zumindest die vorgenannte Länge aufweisen. Besonders vorteilhaft sind jedoch Langfasern, die eine Länge von zumindest 1000 mm, vorzugsweise jedoch zumindest 5000 mm, aufweisen. Vorzugsweise handelt es sich bei den Langfasern um Filamente, bzw. Endlosfasern. Das Bewehrungssystem ist dazu geeignet die Tragfähigkeit des fertigen Oberflächenschutzsystems zu erhöhen, wenn das Matrixmaterial ausgehärtet ist. Das Matrixmaterial erstreckt sich vorzugsweise vorwiegend in der ersten und der zweiten Haupterstreckungsrichtung und bildet eine Schicht mit im Wesentlichen gleichmäßiger Schichtdicke in einer Dickenrichtung, die senkrecht zu der ersten und der zweiten Haupterstreckungsrichtung verläuft. In dieser Schicht ist auch das Bewehrungssystem angeordnet. Eine Schicht oder etwas schichtförmiges im Sinne dieser Schutzrechtsanmeldung ist eine flächenhaft ausgebreitete Masse (z.B. Matrixmaterial oder Dichtmittel) mit einer im Vergleich zu ihrer Erstreckung in Richtung der Haupterstreckungsrichtungen geringen Schichtdicke in Dickenrichtung. Die Schichten des schichtförmigen Oberflächenschutzsystems erstrecken sich also vorteilhafterweise vorwiegend in Richtung der ersten und der zweiten Haupterstreckungsrichtung. Einzelne Schichten des schichtförmigen Oberflächenschutzsystems sind durch Grenzflächen, die vorzugsweise im Wesentlichen parallel zu der zu schützenden Oberfläche verlaufen, voneinander getrennt. Das Teilvolumen, welches das Dichtmittel enthält, enthält vorteilhafterweise mineralische Stoffe. Besonders vorteilhaft ist es, wenn das Teilvolumen, das das Dichtmittel enthält, ein Beton oder Mörtel ist. Das Matrixmaterial und/oder das Teilvolumen, das das Dichtmittel enthält, enthalten vorteilhafterweise Bindemittel. Besonders vorteilhaft sind dabei alkalisch aktivierte Bindemittel. Das genannte Dichtmittel ist vorteilhafterweise derart mit einem Teilvolumen vermengt, dass das Dichtmittel im Wesentlichen gleichmäßig in diesem Teilvolumen verteilt ist. Dabei kann das Dichtmittel auch in Partikeln enthalten sein, die im Wesentlichen gleichmäßig in dem Teilvolumen verteilt sind. Wenn das Dichtmittel in Partikeln enthalten ist, wird das Dichtmittel vorteilhafterweise beim Entstehen eines Risses in dem Teilvolumen freigesetzt, wenn der Riss durch einen Partikel verläuft. Das Matrixmaterial und ein Teilvolumen, das das Dichtmittel enthält, können unterschiedliche stoffliche Zusammensetzungen (z.B. unterschiedliche Gewichtsanteile der Inhaltsstoffe) haben. In einer möglichen Ausführungsform enthält das Matrixmaterial kein Dichtmittel. Genauso ist aber auch eine Ausführungsform denkbar, bei der das Matrixmaterial selbst ein Teilvolumen ist, dass das Dichtmittel enthält.

Auch wenn sich das schichtförmige Oberflächenschutzsystem vorwiegend in der ersten Haupterstreckungsrichtung und der zweiten Haupterstreckungsrichtung erstreckt, so ist es dennoch schichtförmig, erstreckt sich also (in deutlich geringerem Maße als in die Haupterstreckungsrichtungen) auch in einer Dickenrichtung, die senkrecht zu der ersten und der zweiten Haupterstreckungsrichtung verläuft. Durch die Steigerung des Festkörpervolumens bei Kontakt des Dichtmittels zu typischen Umgebungsstoffen können Risse direkt nach deren Entstehung wieder verschlossen werden. Das Dichtmittel ermöglicht also die Selbstheilung des Oberflächenschutzsystems. Derartige Dichtmittel können spezielle mineralische Zusatzstoffe (z.B. Flugasche, Quarzstaub, Hochofenschlacke, kalzinierter Kaolin), kristallbildende Stoffe, superabsorbierende Kunststoffe und/oder polymere Zusatzstoffe (z.B. Epoxidharz in Kombination mit Calciumhydroxid) sein. Superabsorbierende Kunststoffe können vorteilhafterweise in Form eines Hydrogels vorliegen. Ein derartiges Hydrogel kann polare vernetzte Polymere (z.B. Polyacrylimid, Polyvinylpyrrolidon) enthalten. Das Hydrogel kann aber auch Copolymere (z.B. ein Copolymer aus Natriumacrylat und Acrylamid) enthalten. Weiterhin kann das Dichtmittel in Partikeln enthalten sein, die das Dichtmittel mit einer Kapsel umhüllen und das Dichtmittel erst freisetzen, wenn die Kapsel zum Beispiel durch einen Riss beschädigt wird. Die Kapsel kann eine Polymerkapsel aus einem Kunststoff sein. Vorteilhafterweise umfasst die Kapsel zumindest einen der folgenden Kunststoffe: Polystyrol, Polylactid, Polymethylmethacrylat, Polyethylengylcol, Polyethylenterephthalat, Polypropylen, Polyethylen. Vorteilhafterweise kann das Dichtmittel ein Bakterium sein. Die Veröffentlichung "A Review of Self-Healing for Damage Management of Structures" (De Belie et al., Advanced Material Interfaces, Mai 2018) gibt in den Kapiteln 1.2 bis 3.2 einen Überblick über mögliche Dichtmittel. Alle dort beschriebenen Dichtmittel können vorteilhaft mit den in dieser Schutzrechtsanmeldung offenbarten Ausführungsbeispielen kombiniert werden.

Es ist vorteilhaft, wenn das schichtförmige Oberflächenschutzsystem zumindest zwei vorzugsweise schichtförmige Teilvolumen mit unterschiedlicher Materialzusammensetzung aufweist. Zumindest eines der zwei vorzugsweise schichtförmigen Teilvolumen ist ein Teilvolumen, das das Dichtmittel enthält. Vorteilhafterweise enthalten beide der zwei vorzugsweise schichtförmigen Teilvolumen das Dichtmittel. Weitere Vorteile ergeben sich, wenn die zumindest zwei schichtförmigen Teilvolumen unterschiedliche Konzentrationen an Dichtmittel haben. In einer weiteren vorteilhaften Ausführungsform weist das Oberflächenschutzsystem drei oder mehr schichtförmige Teilvolumen auf, von denen zumindest zwei, bevorzugterweise jedoch jedes Teilvolumen, das Dichtmittel enthalten.

Erfindungsgemäß ist das Dichtmittel mit dem Matrixmaterial vermengt. Das Matrixmaterial ist dann im Sinne dieser Schutzrechtsanmeldung ein Teilvolumen, das das Dichtmittel enthält. Besonders vorteilhaft ist es, wenn das Dichtmittel im Wesentlichen gleichmäßig mit dem Matrixmaterial vermengt ist. Vorteilhaft ist auch ein schichtförmiges Oberflächenschutzsystem mit zumindest einem zweiten Teilvolumen, das eine höhere Konzentration an Dichtmittel hat als das Matrixmaterial.

Vorteilhafterweise erstrecken sich die Langfasern des Oberflächenschutzsystems im Wesentlichen in einer Ebene, die von der ersten und der zweiten Haupterstreckungsrichtung aufgespannt wird. Die Langfasern verlaufen vorzugsweise parallel zu einer zu schützenden Oberfläche. An Stellen, an denen sich einzelne Langfasern kreuzen, kann es sein, dass zumindest eine der Langfasern einen Faserverlauf aufweist, der auch in Dickenrichtung läuft, um einer anderen kreuzenden Langfaser "auszuweichen". Trotz dieses "Ausweichens" verläuft eine derartige Langfaser dann im Sinne dieses Schutzrechts im Wesentlichen in einer Ebene, die von der ersten und der zweiten Haupterstreckungsrichtung aufgespannt wird.

Weitere Vorteile ergeben sich, wenn die Langfasern an jeder Stelle ihrer Längserstreckung von einer zumindest 5 mm, vorzugsweise zumindest 10 mm, dicken Schicht des Matrixmaterials umgeben sind. Es hat sich gezeigt, dass dadurch die Lasteinleitung in die Fasern verbessert werden kann. Weiterhin sind die Fasern dadurch geschützt und können insbesondere beim Befahren des Oberflächenschutzsystems nicht beschädigt werden. Auf diese Weise ergibt sich über den Langfasern auch eine Randschicht mit einer Dicke von zumindest 5 mm, vorzugsweise zumindest 10 mm, in Dickenrichtung, die Matrixmaterial aber keine Langfasern enthält. Diese Randschicht kann Verschleiß unterliegen, ohne dass die Funktion des Oberflächenschutzsystems dadurch beeinträchtigt wird, dass Langfasern freigelegt werden.

Die Langfasern können eine Beschichtung aufweisen, die Vorsprünge umfasst. Vorteilhafterweise haben die Vorsprünge eine Größe von 0,1 mm bis 3 mm, vorzugsweise jedoch von 0,2 mm bis 1 mm. Die Vorsprünge sind in einer Richtung senkrecht zu der Oberfläche der Langfasern gegenüber einem Großteil der Beschichtung erhaben. Die Vorsprünge verbessern die Anbindung des Bewehrungssystems an das Matrixmaterial. Auf diese Weise kann die Entstehung großer Risse vermieden oder zumindest verzögert werden.

Die Langfasern können eine ein Schüttgutmaterial enthaltende Beschichtung aufweisen. Hierfür ist es ausreichend, wenn die Oberfläche zumindest einer Teilmenge der Langfasern zumindest teilweise mit dem Schüttgutmaterial beschichtet ist. Das Schüttgutmaterial dient dazu die Vorsprünge zu bilden, die senkrecht zu der Oberfläche der Langfasern hervorstehen. Eine derartige Beschichtung ist dazu geeignet die Oberflächenrauheit des Bewehrungssystems zu erhöhen. Durch die damit verbesserte Anbindung des Bewehrungssystems an das Matrixmaterial kann die Schutzwirkung des Oberflächenschutzsystems gegen das Eindringen von Wasser und Chloriden durch Risse im Vergleich zu bisher bekannten Oberflächenschutzsystemen verbessert werden. Ein Schüttgutmaterial im Sinne dieser Schutzrechtsanmeldung ist ein pulvriges, körniges oder stückiges Gemenge eines Materials - es ist also ein Material, das in einer schüttfähigen Form vorliegt.

Vorteilhafterweise umfasst das Schüttgutmaterial Sand, vorzugsweise Quarzsand. Ein Quarzsand ist Sand, der Quarzkörner enthält. Der Quarzsand umfasst vorteilhafterweise zu mindestens 50% (Gewicht) Quarzkörner. Das Schüttgutmaterial kann vorteilhafterweise auch jedes andere schüttfähige Material enthalten, insbesondere mineralische Stoffe.

Das Schüttgutmaterial weist vorteilhafterweise eine Korngröße von 0,1 bis 1 mm auf. Besonders bevorzugt ist ein Schüttgutmaterial, das eine Korngröße von 0,2 bis 0,5 mm aufweist. Überraschenderweise hat sich in diesem Auswahlbereich in Kombination mit den anderen erfindungsgemäßen Merkmalen ein positiver Effekt eingestellt, der mit zunehmender Korngröße nicht mehr signifikant gesteigert werden kann.

Weitere Vorteile ergeben sich, wenn das Dichtmittel bei Kontakt mit den typischen Umgebungsstoffen, vorzugsweise Wasser (bzw. Feuchtigkeit) und/oder Sauerstoff, Kristalle bildet. Derartige Dichtmittel sind zum Beispiel unter den Produktnamen "Xypex Admix" von der Firma Xypex Chemical Corporation oder "Krystaline Add1" von der Firma wba Abdichtungssysteme GmbH bekannt. Die erfindungsgemäße Lehre kann aber auch mit allen anderen Dichtmitteln, die bei Kontakt mit den typischen Umgebungsstoffen Kristalle bilden, vorteilhaft ausgeführt werden. Unter typischen Umgebungsstoffen im Sinne dieser Erfindung sind Stoffe zu verstehen, die in und/oder an Betonbauteilen üblicherweise vorkommen. Dies sind zum Beispiel Wasser, Luft oder mineralische Stoffe aus dem Beton selbst. Das Dichtmittel, das bei Kontakt mit den typischen Umgebungsstoffen Kristalle bildet, macht sich die Struktur des Matrixmaterials zunutze: es fördert das Nachquellen unhydratierter Bestandteile des Matrixmaterials und bildet in Rissen zusätzlichen Feststoff durch Kristallisation. Diese Prozesse finden vorteilhafterweise statt, bis das Dichtmittel keinen Kontakt mehr zu Wasser hat und werden fortgesetzt, sobald erneut Wasser mit dem Dichtmittel in Kontakt kommt. Auf diese Weise können Defekte im Matrixmaterial, wie zum Beispiel Risse, direkt nach deren Entstehung und auch noch nach vielen Jahren wasserdicht verschlossen werden. Das schichtförmige Oberflächenschutzsystem schützt eine von dem Oberflächenschutzsystem zu schützende Oberfläche dadurch effektiv vor Feuchtigkeit und korrosiven Stoffen, die mit der Feuchtigkeit transportiert werden.

Das Dichtmittel kann vorteilhafterweise zumindest ein Bakterium umfassen, das bei Kontakt mit zumindest einem typischen Umgebungsstoff, einen Feststoff, vorzugsweise Calciumcarbonat CaCO₃ - also Kalkstein -, in der Schutzschicht bildet. Ein derartiger Dichtstoff ist zum Beispiel unter dem Produktnamen "Green Basilisk" der Firma wba Abdichtungssysteme GmbH bekannt. Vorteilhafterweise nutzt ein solches Dichtmittel biochemische Prozesse zur Bildung von Kalkstein. Es kann vorteilhaft sein, wenn das Dichtmittel neben dem zumindest einen Bakterium eine Nährlösung enthält, die neben den typischen Umgebungsstoffen alle Stoffe umfasst, die für die Bildung eines Feststoffes durch das Bakterium benötigt werden. Vorteilhafterweise umfasst die Nährlösung Calciumcarbonat. Auf diese Weise können Defekte im schichtförmigen Oberflächenschutzsystem - z.B. Risse -, direkt nach deren Entstehung wasserdicht verschlossen werden.

Es hat sich als besonders vorteilhaft erwiesen, wenn das zumindest eine Bakterium aus einer der Gattungen Bacillus, Planococcus oder Sporosarcina stammt. Mit Bakterien aus diesen Gattungen hat sich in Kombination mit den erfindungsgemäßen Merkmalen eine besonders gute Rissheilung bei Kontakt mit den typischen Umgebungsstoffen gezeigt.

Weitere Vorteile ergeben sich, wenn die Langfasern des Bewehrungssystems zumindest eine Kohlenstofffaser und/oder zumindest eine Glasfaser umfassen. In einem derartigen schichtförmigen Oberflächenschutzsystem sind besonders die hohe chemische Beständigkeit und die guten mechanischen Eigenschaften dieser Fasern von Vorteil. Es können jedoch auch weitere Faserarten vorteilhaft mit allen zuvor offenbarten Ausführungsvarianten kombiniert werden, zum Beispiel Aramidfasern oder Naturfasern wie Hanf und Flachs.

Erfindungsgemäß umfasst das Bewehrungssystem eine Polymermatrix, die die Langfasern umhüllt und vorzugsweise zumindest ein duromeres Harz, besonders bevorzugt Epoxidharz oder Vinylesterharz, enthält. Unter einer Polymermatrix, die die Langfasern umhüllt, ist im Sinne dieses Schutzrechts auch eine Polymermatrix zu verstehen, mit der die Langfasern getränkt oder infiltriert sind. Vorteilhafterweise ist die Polymermatrix ein Bestandteil der Beschichtung der Langfasern. Mit einer derartigen Polymermatrix können die mechanischen Eigenschaften der Langfasern gezielt genutzt und eine Vielzahl von Langfasern stoffschlüssig miteinander verbunden werden. Die Polymermatrix kann eine Vielzahl von Langfasern vorteilhafterweise umhüllen und Freiräume zwischen den Langfasern auffüllen, um eine stoffschlüssige Verbindung zwischen den Langfasern zu bilden. Langfasern mit einer Polymermatrix sind allgemein auch als Faserverbundkunststoffe oder faserverstärkte Kunststoffe bekannt. Derartige Faserverbundkunststoffe zeichnen sich durch ihre hohe Steifigkeit aus. Insbesondere sind solche Faserverbundkunststoffe nicht flexibel.

In einer vorteilhaften Ausführungsform weist das Bewehrungssystem Faserstränge auf, die jeweils eine Vielzahl der Langfasern umfassen, wobei die Faserstränge derart zueinander angeordnet sind, dass sich die Faserstränge in Knotenpunkten kreuzen, und wobei die Faserstränge in den Knotenpunkten miteinander verbunden sind. Faserstränge, die sich kreuzen, sind Faserstränge, deren Faserrichtung in unterschiedliche Richtungen verlaufen. Vorzugsweise sind die Faserstränge senkrecht zueinander angeordnet. Die Faserstränge sind vorzugsweise formschlüssig und/oder stoffschlüssig (z.B. durch eine Polymermatrix) miteinander verbunden. Weitere Vorteile ergeben sich, wenn die Langfasern gestreckt angeordnet sind - also ein Gelege bilden. Gelege sind flächige textile Gebilde, die keine Maschen bzw. Faserondulationen (Faserwelligkeiten) aufweisen. Als Gelege unterscheiden sie sich von Textilien, in denen die Fasern üblicherweise nicht gestreckt vorliegen, sondern Faserondulationen (Faserwelligkeiten) aufweisen - also flächigen textilen Gebilden wie zum Beispiel Geweben, Gestricken, Geflechten, Nähgewirken, Vliesstoffen, Matten oder Filzen. Besonders vorteilhaft ist es, wenn das Bewehrungssystem ein biegesteifer Festkörper ist. Es ist besonders vorteilhaft, wenn eine erste Menge an Fasersträngen in eine erste Richtung (also parallel zueinander in diese Richtung) und eine zweite Menge an Fasersträngen in eine zweite Richtung verlaufen, so dass sich die Faserstränge der ersten Menge und die Faserstränge der zweiten Menge in Knotenpunkten kreuzen, wobei die Faserstränge in den Knotenpunkten miteinander verbunden sind und ein Gitter mit vorzugsweise gleichmäßigem Gitterabstand bilden. Es kann vorteilhaft sein, diesem Gitter weitere Mengen an Fasersträngen, die in weitere Richtungen verlaufen, hinzuzufügen. Auf diese Weise wird ein Bewehrungssystem gebildet, bei dem in zwei oder mehreren Richtungen "Faserstränge", die im Wesentlichen ausgerichtet oder gestreckt sind, verlaufen. Wenn die Faserstränge von einer Polymermatrix umhüllt sind, handelt es sich um ein Gitter aus Faserverbundkunststoff. Das Gitter wird vorteilhafterweise gebildet, indem eine Vielzahl an Fasersträngen in den jeweiligen Richtungen nebeneinander angeordnet und miteinander verbunden werden. Der Abstand der Faserstränge bildet den Gitterabstand des Gitters und beschreibt die Größe der Gitteröffnungen. Vorteilhafterweise liegen mehrere Faserstränge nebeneinander in mindestens zwei verschiedenen Richtungen. Ebenso ist es vorteilhaft, wenn mehrere Faserstränge in einer Richtung nebeneinander angeordnet und durch Hilfsfäden in Ihrer Lage stabilisiert und verbunden sind. In diesem Fall würden die Knotenpunkte zwischen den Fasersträngen und den Hilfsfäden entstehen. Die Faserstränge können verschiedene Fasermaterialien umfassen. Zum Beispiel können die in eine erste Richtung weisenden Faserstränge Glasfasern und die in eine zweite Richtung weisenden Faserstränge Kohlenstofffasern umfassen. Es können zum Beispiel auch Faserstränge aus Glasfasern und Faserstränge aus Kohlenstofffasern, die in die gleiche Richtung weisen, alternierend nebeneinander angeordnet werden. Weitere Vorteile ergeben sich, wenn die Faserstränge zunächst aus unbeschichteten Langfasern gebildet werden und die Langfasern der jeweiligen Faserstränge anschließend derart gemeinsam beschichtet werden, dass alle Langfasern des jeweiligen Faserstranges von einer Beschichtung umhüllt werden. Vorteilhafterweise füllt die Beschichtung dabei die Zwischenräume zwischen den Langfasern auf.

Der Elastizitätsmodul zumindest einer der Langfasern beträgt mindestens 70.000 MPa, vorzugsweise jedoch mindestens 200.000 MPa. Mit derartigen Langfasern kann die Schutzwirkung des schichtförmigen Oberflächenschutzsystems gegen eindringendes Wasser verbessert werden, indem der Rissbildung entgegengewirkt wird.

Weitere Vorteile ergeben sich, wenn das schichtförmige Oberflächenschutzsystem eine Schichtdicke von maximal 50 mm, vorzugsweise jedoch maximal 20 mm, aufweist, wobei die Schichtdicke die Erstreckung des Oberflächenschutzsystems in einer Dickenrichtung, die senkrecht zu der ersten Haupterstreckungsrichtung und der zweiten Haupterstreckungsrichtung verläuft, ist. Die Dickenrichtung weist somit in Richtung der Flächennormale der zu schützenden Oberfläche. Durch die geringe Schichtdicke eignen sich solche schichtförmige Oberflächenschutzsysteme insbesondere in Tiefgaragen und Tunneln, wo durch die geringe Schichtdicke eine möglichst große Durchfahrtshöhe für Fahrzeuge erhalten bleibt.

Zusätzliche Vorteile ergeben sich bei einem schichtförmigen Oberflächenschutzsystem, das Kurzfasern, die eine Länge von maximal 50 mm aufweisen und mit dem Matrixmaterial vermengt sind, umfasst. Das Matrixmaterial kann mit den Kurzfasern zusätzlich verstärkt werden, um die Schichtdicke bei gleichbleibender Belastbarkeit des Oberflächenschutzsystems zu reduzieren und die Bildung großer Risse zu verhindern.

Die Aufgabe der Erfindung wird ebenfalls gelöst durch ein bewehrtes Betonbauteil mit folgenden Merkmalen:
- einer Tragschicht, die sich schichtförmig vorwiegend in einer ersten Haupterstreckungsrichtung und einer zweiten Haupterstreckungsrichtung erstreckt und mineralische Stoffe umfasst, (z.B. Beton oder Mörtel)
- einer Hauptbewehrung, die vorzugsweise zumindest ein metallisches Material umfasst und vorzugsweise als Gitter in der Tragschicht angeordnet ist,
- einem schichtförmigen Oberflächenschutzsystem, das ein Matrixmaterial - wie Beton oder Mörtel - vorzugsweise aus mineralischen Stoffen umfasst, und das sich schichtförmig vorwiegend in einer ersten und einer zweiten Haupterstreckungsrichtung erstreckt,
- zumindest einem Dichtmittel, das zumindest in einem Teilvolumen des schichtförmigen Oberflächenschutzsystems enthalten ist,
- wobei das zumindest eine Dichtmittel derart beschaffen ist, dass es bei Kontakt mit typischen Umgebungsstoffen wie Wasser oder Luft das Festkörpervolumen des Oberflächenschutzsystems steigert,
wobei das bewehrte Betonbauteil zusätzlich ein Bewehrungssystem aufweist, das in dem schichtförmigen Oberflächenschutzsystem angeordnet und von dem Matrixmaterial umschlossen ist, und das Langfasern umfasst, welche zumindest eine Länge von 100 mm aufweisen, wobei der Elastizitätsmodul zumindest einer der Langfasern mindestens 70.000 MPa, vorzugsweise jedoch mindestens 200.000 MPa, beträgt, und wobei das Bewehrungssystem eine Polymermatrix umfasst, die die Langfasern umhüllt. Mineralische Stoffe in der Tragschicht können vorteilhafterweise Beton und/oder Mörtel sein. Die Hauptbewehrung in der Tragschicht kann zum Beispiel Stahl enthalten, wobei der Stahl in Form von Bewehrungsstäben vorzugsweise in einem zweidimensionalen und/oder dreidimensionalen Gitter angeordnet ist. Das Betonbauteil ist ein mit dem schichtförmigen Oberflächenschutzsystem in Verbindung stehendes Erzeugnis. Alle in den vorstehenden Abschnitten offenbarten Merkmale eines schichtförmigen Oberflächenschutzsystem sind vorteilhaft mit dem Betonbauteil kombinierbar. Die in den vorigen Abschnitten eingeführten begrifflichen Definitionen gelten auch im Zusammenhang mit dem Betonbauteil.

In dem erfindungsgemäßen bewehrten Betonbauteil ist das Dichtmittel mit dem Matrixmaterial vermengt. Das Materialmatrix ist dann im Sinne dieses Schutzrechts ein Teilvolumen des schichtförmigen Oberflächenschutzsystems, das das Dichtmittel enthält. Vorteilhafterweise ist das Dichtmittel im Wesentlichen gleichmäßig mit der Materialmatrix vermengt.

Weitere Vorteile ergeben sich, wenn zwischen der Tragschicht und dem Matrixmaterial ein vorzugsweise schichtförmiges Teilvolumen angeordnet ist, das das zumindest eine Dichtmittel enthält. Vorzugsweise verbindet ein schichtförmiges Teilvolumen, das das zumindest eine Dichtmittel enthält, zwischen dem Matrixmaterial und der Tragschicht das schichtförmige Oberflächenschutzsystem stoffschlüssig mit der Tragschicht. Vorzugsweise ist der Gewichtsanteil des Dichtmittels in dem schichtförmigen Teilvolumen, das das Dichtmittel enthält, mindestens doppelt so groß wie der Gewichtsanteil eines Dichtmittels in dem Matrixmaterial, wenn das Matrixmaterial ebenfalls ein Dichtmittel enthält. Derartige schichtförmige Teilvolumen bieten einen erhöhten Schutz gegen eindringende Feuchtigkeit, bzw. eindringendes Wasser - insbesondere zwischen dem Matrixmaterial und der zu schützenden Oberfläche.

Die Aufgabe der Erfindung wird ebenfalls gelöst durch ein Verfahren zum Aufbringen eines schichtförmigen Oberflächenschutzsystems mit den nachstehenden Verfahrensschritten:
- Aufbringen zumindest eines ersten Anteils eines Matrixmaterials - wie Beton oder Mörtel -, das vorzugsweise mineralische Stoffe umfasst, auf zumindest einer zu schützenden Oberfläche derart, dass eine sich vorwiegend in einer ersten Haupterstreckungsrichtung X und einer zweiten Haupterstreckungsrichtung Y, die senkrecht zueinander und parallel zu der zu schützenden Oberfläche verlaufen, erstreckende Schicht gebildet wird,
- Aufbringen zumindest eines Dichtmittels,
- wobei das zumindest eine Dichtmittel derart beschaffen ist, dass es bei Kontakt mit typischen Umgebungsstoffen wie Wasser und/oder Luft das Festkörpervolumen des Oberflächenschutzsystems steigert.

Zusätzlich wird ein Bewehrungssystem, das Langfasern umfasst, welche zumindest eine Länge von 100 mm aufweisen, in das Matrixmaterial eingelegt, wobei das Bewehrungssystem vorzugsweise vollständig von dem Matrixmaterial umgeben ist, wobei der Elastizitätsmodul zumindest einer der Langfasern mindestens 70.000 MPa, vorzugsweise jedoch mindestens 200.000 MPa, beträgt, und das Matrixmaterial wird anschließend ausgehärtet. Das Bewehrungssystem wird also vor dem Aushärten des Matrixmaterials in dieses eingelegt. Bevorzugterweise umfasst das Einlegen eine Positionierung des Bewehrungssystems in einer vorbestimmten Position, die vorzugsweise parallel zu der zu schützenden Oberfläche ist. Vorteilhafterweise wird das Bewehrungssystem derart eingelegt, dass es mindestens um 5 mm von der zu schützenden Oberfläche beabstandet ist. Alle in den vorstehenden Abschnitten offenbarten Merkmale eines schichtförmigen Oberflächenschutzsystem und eines Betonbauteils können vorteilhafterweise Bestandteil des Verfahrens sein. Die in den vorigen Abschnitten eingeführten begrifflichen Definitionen gelten auch im Zusammenhang mit dem Verfahren. Das Bewehrungssystem umfasst vorteilhafterweise Kohlenstofffasern und/oder Glasfasern. Besonders bevorzugt ist ein gitterförmiges Bewehrungssystem, das einen Verbundwerkstoff aus Kohlenstofffasern und/oder Glasfasern und einer Polymermatrix - also einen Faserverbundkunststoff - umfasst.

Weitere Vorteile ergeben sich, wenn die Langfasern des Bewehrungssystems vor dem Einlegen des Bewehrungssystems in das Matrixmaterial zumindest teilweise mit zumindest einem Schüttgutmaterial beschichtet werden. Die Vorteile einer Beschichtung mit einem Schüttgutmaterial wurden bereits in den vorstehenden Abschnitten erläutert. Vorteilhafterweise umfasst das Schüttgutmaterial Sand. Es ist besonders vorteilhaft, wenn das Schüttgutmaterial Quarzsand umfasst. Vorteilhafterweise wird das Schüttgutmaterial mit Hilfe einer einstellbaren Streuvorrichtung auf die Langfasern aufgebracht. Die Streuvorrichtung umfasst einen Behälter mit zumindest einem Loch, wobei das Schüttgutmaterial, vorzugsweise durch Einwirken der Schwerkraft, durch das Loch fallend auf die Langfasern aufgebracht wird. Die Streuvorrichtung kann eine Einstellvorrichtung umfassen, mit der der Querschnitt des Loches teilweise überdeckt werden kann, um die Menge des Schüttgutmaterials zu regulieren. Alternativ kann die Beschichtung mit einem Schüttgutmaterial derart auf die Langfasern aufgebracht werden, dass die Langfasern unter Kontakt mit dem Schüttgutmaterial durch ein Behältnis geführt werden, welches mit dem Schüttgutmaterial gefüllt ist. Vorteilhafterweise sind die Langfasern hierfür mit einer Polymermatrix getränkt, die noch nicht ausgehärtet ist.

Es hat sich als vorteilhaft erwiesen, wenn die Langfasern zum Beschichten mit einer aushärtbaren Polymermatrix, die vorzugsweise einen Duroplast umfasst, getränkt werden. Vorteilhafterweise wird die Polymermatrix nach dem Beschichten mit dem zumindest einen Schüttgutmaterial ausgehärtet, bevor das Bewehrungssystem in das Matrixmaterial eingelegt wird. Auf diese Weise wird das Schüttgutmaterial stoffschlüssig mit dem Bewehrungssystem verbunden und kann ohne Verwendung eines zusätzlichen Klebstoffes in bestehende Herstellungsprozesse integriert werden.

Weitere Vorteile ergeben sich, wenn das Dichtmittel vor dem Aufbringen des zumindest einen ersten Anteils des Matrixmaterials mit dem Matrixmaterial vermengt wird und das Dichtmittel gemeinsam mit dem Matrixmaterial aufgebracht wird. Die beiden zuvor beschriebenen Verfahrensschritte des Aufbringens des ersten Anteils des Matrixmaterials und das Aufbringen des Dichtmittels können auf diese Weise in einem gemeinsamen Verfahrensschritt erfolgen. Das Dichtmittel ist dann vorzugsweise gleichmäßig in einer von dem Matrixmaterial gebildeten Schicht enthalten.

Vorteilhafterweise wird nach dem Einlegen des Bewehrungssystems in das Matrixmaterial ein zweiter Anteil des Matrixmaterials auf dem ersten Anteil des Matrixmaterials und dem Bewehrungssystem aufgebracht. So kann einerseits sichergestellt werden, dass das Bewehrungssystem von der zu schützenden Oberfläche beabstandet ist und dennoch von allen Seiten mit einer ausreichend großen Menge des Matrixmaterials umgeben ist.

In einer besonders vorteilhaften Ausführungsform des Verfahrens wird vor dem Aufbringen des Matrixmaterials eine Schicht, die das zumindest eine Dichtmittel enthält, aufgebracht, wobei die Schicht vorzugsweise mineralische Stoffe umfasst. Die Schicht enthält vorteilhafterweise Beton oder Mörtel. Das Dichtmittel ist vorteilhafterweise im Wesentlichen gleichmäßig in der Schicht verteilt. Eine derartige Schicht, die vor dem Aufbringen des Matrixmaterials auf die zu schützende Oberfläche aufgebracht wird, stellt eine stoffschlüssige Verbindung zwischen der zu schützenden Oberfläche und dem Matrixmaterial her und bietet einen zusätzlichen Schutz vor eindringendem Wasser zwischen der zu schützenden Oberfläche und dem Matrixmaterial. Die Schicht ist im Sinne dieses Schutzrechts ein Teilvolumen des schichtförmigen Oberflächenschutzsystems, das ein Dichtmittel enthält.

Vorteile ergeben sich auch, wenn das Verfahren zusätzlich die nachfolgenden Schritte aufweist: vor dem Aufbringen des zumindest einen ersten Anteils des Matrixmaterials wird Material eines Betonbauteils zumindest teilweise abgetragen, und durch den Abtrag dieses Materials wird die zu schützende Oberfläche erzeugt. Vorzugsweise weist das Betonbauteil eine Bewehrung auf. Diese Verfahrensschritte können dem Verfahren zum Beispiel im Zuge einer Betoninstandsetzung hinzugefügt werden. Das abgetragene Material des Betonbauteils ist dann vorteilhafterweise eine Betondeckschicht, die die Bewehrung des Betonbauteils bedeckt. Die Betondeckschicht kann Defekte, wie Risse oder Fehlstellen enthalten, die durch den Abtrag des Materials entfernt werden, um anschließend mit dem schichtförmigen Oberflächenschutzsystem wieder ein qualitativ hochwertiges und fehlerfreies Bauteil mit langer Lebensdauer herzustellen. Zusätzlich entsteht durch den Materialabtrag ein Bauteil mit möglichst geringer Schichtdicke, was zum Beispiel bei Anwendung des Bauteils als Fahrbahn in einer Tiefgarage von großer Bedeutung ist.
- Fig. 1: Figur 1 zeigt ein Betonbauteil (2) mit einem schichtförmigen Oberflächenschutzsystem (1), das ein Bewehrungssystem (6) umfasst.
- Fig. 2: Figur 2 zeigt eine Langfaser (7), die eine Beschichtung (9) mit einem Schüttgutmaterial (8) und einer Polymermatrix (10) aufweist.
- Fig. 3: Figur 3 zeigt ein Betonbauteil (2) mit einem schichtförmigen Oberflächenschutzsystem (1), Kurzfasern (14) und einem Teilvolumen (17), das ein Dichtmittel (4) enthält.
- Fig. 4: Figur 4 zeigt das Betonbauteil (2) aus Fig. 1, das einen Riss (18) aufweist.
- Fig. 5: Figur 5 zeigt das Betonbauteil (2) aus Fig. 4, wobei der Riss (18) verschlossen ist.

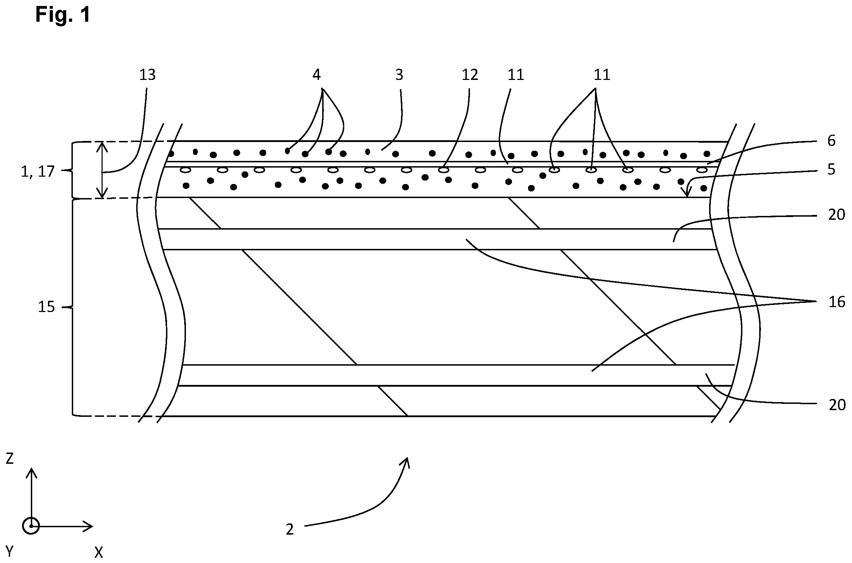

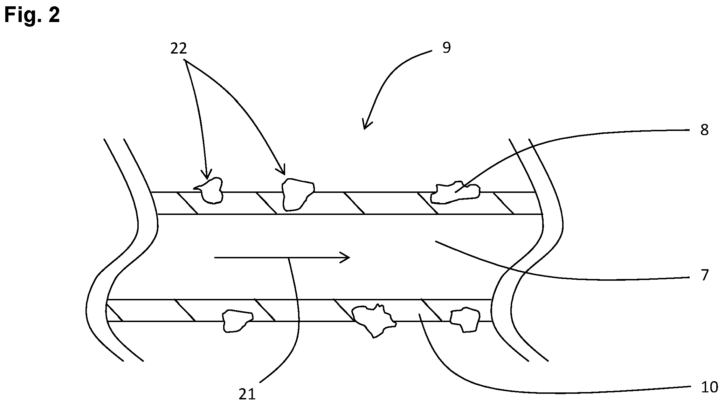

Die Figur 1 zeigt ein Betonbauteil 2, das sich vorwiegend in einer ersten Haupterstreckungsrichtung X und einer zweiten Haupterstreckungsrichtung Y erstreckt, mit einem schichtförmigen Oberflächenschutzsystem 1, das sich ebenfalls vorwiegend in der ersten Haupterstreckungsrichtung X und der zweiten Haupterstreckungsrichtung Y erstreckt. In einer Dickenrichtung Z, die senkrecht zu der ersten und zweiten Haupterstreckungsrichtung X, Y verläuft, weist das schichtförmige Oberflächenschutzsystem 1 eine im Wesentlichen gleichmäßige Schichtdicke 13 auf. Das schichtförmige Oberflächenschutzsystem 1 ist auf einer zu schützenden Oberfläche 5 einer Tragschicht 15 angeordnet. In der Tragschicht 15 ist eine Hauptbewehrung 16 angeordnet, die aus einem metallischen Material besteht und zwei Bewehrungsstäbe 20 des metallischen Materials umfasst. In einer vorteilhaften Ausführungsform sind eine Vielzahl solcher Bewehrungsstäbe 20 gitterförmig in der Tragschicht 15 angeordnet. Das metallische Material kann bei Kontakt mit Wasser, z.B. in Folge von auftretenden Rissen, korrodieren. Das schichtförmige Oberflächenschutzsystem 1 dient dazu den Kontakt des metallischen Materials mit Wasser und somit dessen Korrosion zu verhindern. Hierzu umfasst das schichtförmige Oberflächenschutzsystem 1 ein Bewehrungssystem 6, das aus mehreren Fasersträngen 11 zusammengesetzt ist, und ein Matrixmaterial 3, das gleichmäßig mit einem Dichtmittel 4 vermengt ist und das Bewehrungssystem 6 umgibt. Das Bewehrungssystem 6 ist insbesondere in Dickenrichtung Z beidseitig von dem Matrixmaterial 3 bedeckt und wird dadurch vor Umgebungseinflüssen und Abrieb geschützt. Im Sinne dieser Schutzrechtsanmeldung ist das Matrixmaterial 3 in diesem Ausführungsbeispiel ein Teilvolumen 17 des schichtförmigen Oberflächenschutzsystems 1, das das Dichtmittel 4 enthält. Das Dichtmittel 4 liegt in Form von Partikeln vor. Die Partikel sind in Fig. 1 zur besseren Darstellbarkeit vergrößert dargestellt. Die Verteilung des Dichtmittels 4 im Matrixmaterial 3 ist in Fig. 1 beispielhaft dargestellt und erfolgt im Wesentlichen zufällig durch Vermengen des Dichtmittels 4 mit dem Matrixmaterial 3 zu einer möglichst homogenen Masse. Das Dichtmittel 4 reagiert bei Kontakt mit Wasser unter Volumenzunahme und verschließt Defekte in dem schichtförmigen Oberflächenschutzsystem 1. Auf diese Weise wird die zu schützende Oberfläche 5 vor Wasser und Feuchtigkeit geschützt. Das Bewehrungssystem 6 verstärkt dabei die Dichtwirkung des Dichtmittels 4. Die Faserstränge 11 des Bewehrungssystems können eine Vielzahl von Langfasern 7 umfassen, die beispielhaft in Fig. 2 dargestellt sind. In dem in Fig. 1 dargestellten Ausführungsbeispiel sind eine Vielzahl von Fasersträngen 11, deren Faserrichtung 21 (vgl. Fig. 2) in Richtung der zweiten Haupterstreckungsrichtung Y verläuft, in Richtung der ersten Haupterstreckungsrichtung X nebeneinander angeordnet. Diese Faserstränge 11 sind geschnitten dargestellt und an ihrem beispielhaft ovalen Querschnitt erkennbar. Aus Gründen der Übersichtlichkeit wurde jedoch auf eine Schraffur dieser Faserstränge 11 verzichtet. Weiterhin ist in der Abbildung ein Faserstrang 11 dargestellt, dessen Faserrichtung 21 in Richtung der ersten Haupterstreckungsrichtung X verläuft. Parallel zu diesem Faserstrang 11 sind weitere Faserstränge 11 angeordnet, deren Faserrichtung 21 ebenfalls in Richtung der ersten Haupterstreckungsrichtung X verlaufen und die in dieser Darstellung verdeckt und daher nicht sichtbar sind. Die Faserstränge 11 des Bewehrungssystems 6 kreuzen sich an Knotenpunkten 12, sind an diesen Knotenpunkten 12 stoffschlüssig miteinander verbunden und bilden ein Bewehrungssystem 6 in Form eines Gitters, das im Wesentlichen in einer Ebene liegt, die von den beiden Haupterstreckungsrichtungen X, Y aufgespannt wird.

Die Fig. 2 zeigt eine Langfaser 7, die sich im Wesentlichen in eine Faserrichtung 21 erstreckt und eine Beschichtung 9 aufweist, wobei die Beschichtung 9 eine Polymermatrix 10 und eine Vielzahl von Vorsprüngen 22, die die umliegenden Bereiche der Beschichtung 9 in einer Richtung senkrecht zu der Faserrichtung 21 überragen, umfasst. Die Vorsprünge werden in diesem Ausführungsbeispiel von Körnern eines Schüttgutmaterials 8 gebildet. Die Langfaser 7 ist stark vergrößert und nicht vollständig dargestellt, was durch die beidseitigen Bruchlinien verdeutlicht wird. Eine Vielzahl derartiger Langfasern 7 kann zu einem Faserstrang 11 (vgl. Fig. 1) zusammengefasst und als Bestandteil eines Bewehrungssystems 6 (vgl. Fig. 1) eingesetzt werden. Die Faserrichtung 21 des Faserstranges 11 entspricht in diesem Fall dann der Faserrichtung 21 seiner Langfasern 7. Anstelle einer Polymermatrix 10 könnte die Beschichtung 9 auch einen Klebstoff umfassen, der das Schüttgutmaterial 8 stoffschlüssig mit der Langfaser 7 verbindet. In Fig. 2 wird exemplarisch eine Langfaser 7 mit einer Beschichtung 9 gezeigt. Ebenso ist es vorstellbar, dass eine Vielzahl von Langfasern 7, die einen Faserstrang 11 bilden, eine gemeinsame Beschichtung 9 aufweisen.

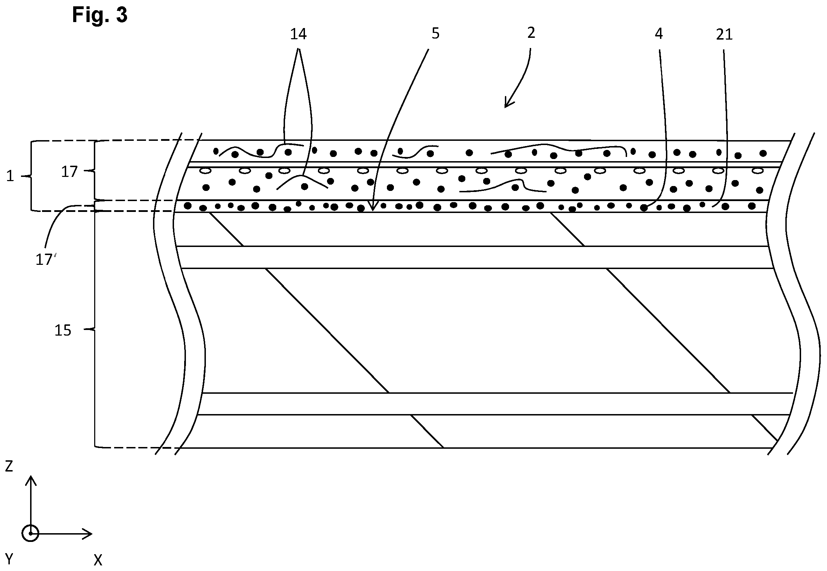

Die Figur 3 zeigt ein Betonbauteil 2 mit den gleichen Merkmalen wie das Betonbauteil 2 aus Fig. 1. Zusätzlich zu dem Ausführungsbeispiel aus Fig. 1 umfasst das schichtförmige Oberflächenschutzsystem 1 des Betonbauteils 2 eine Vielzahl von Kurzfasern 14, die gleichmäßig mit dem Matrixmaterial 3 vermengt sind. Im Sinne dieser Schutzrechtsanmeldung ist das Matrixmaterial 3 in diesem Ausführungsbeispiel ein erstes Teilvolumen 17 des schichtförmigen Oberflächenschutzsystems 1, das das Dichtmittel 4 enthält. Die Kurzfasern 14 ermöglichen eine noch geringere Schichtdicke 13 in Dickenrichtung Z bei gleichbleibender mechanischer Belastbarkeit. Weiterhin ist zwischen der Tragschicht 15 und dem schichtförmigen Oberflächenschutzsystem 1 ein zweites Teilvolumen 17', das das Dichtmittel 4 enthält, angeordnet. Das Dichtmittel 4 ist gleichmäßig in diesem zweiten Teilvolumen 17' verteilt. Es sind jedoch auch Ausführungen des schichtförmigen Oberflächenschutzsystems ohne das zweite Teilvolumen 17' und/oder ohne die Kurzfasern 14 möglich.

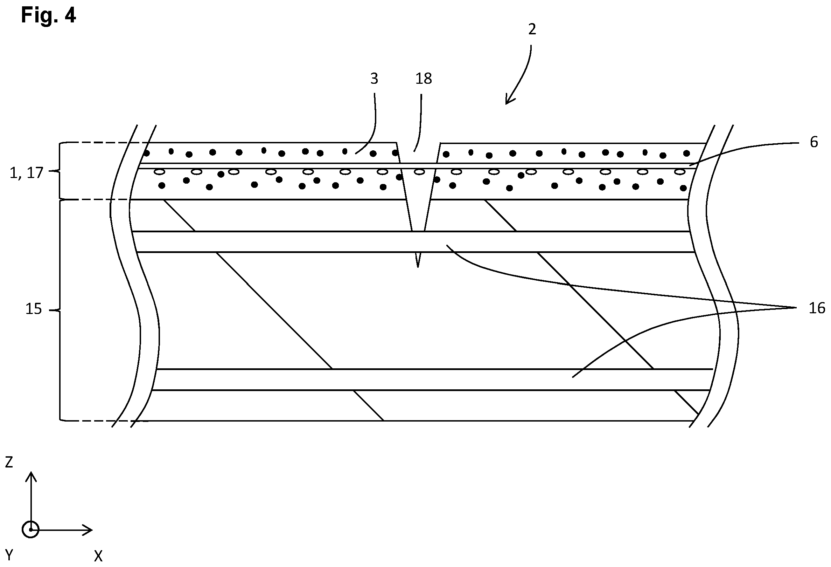

Die Figur 4 zeigt das Betonbauteil 2 aus Fig. 1, das zusätzlich einen Riss 18 aufweist, der sich derart durch das Matrixmaterial 3 des schichtförmigen Oberflächenschutzsystems 1 und die Tragschicht 15 des Betonbauteils 2 erstreckt, dass die Hauptbewehrung 16 abschnittsweise freigelegt ist. Das Bewehrungssystem 6 bleibt auch an der Stelle des Risses 18 intakt und sorgt für eine Stabilisierung des Risses 18 bzw. einen verminderten Rissfortschritt. Üblicherweise würde durch einen derartigen Riss 18 Feuchtigkeit in die Tragschicht 15 eintreten und zur Korrosion der Hauptbewehrung 16 führen.

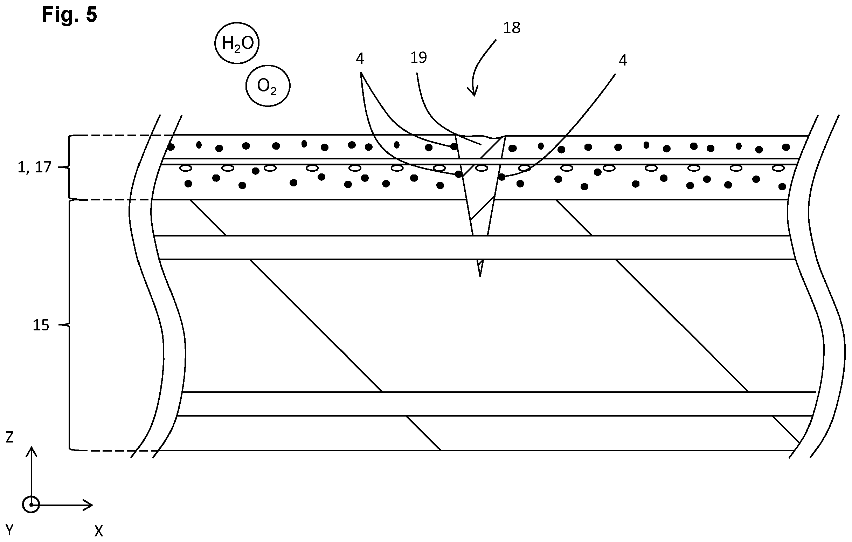

In einem erfindungsgemäßen Betonbauteil 2 wird der Riss 18 aber wie in Figur 5 dargestellt durch die Reaktion des Dichtmittels 4 mit seinen typischen Umgebungsstoffen - in diesem Fall Wasser (H₂O) und Sauerstoff (O₂) - verschlossen. Hierzu wird in dem Riss 18 zusätzliches Festkörpervolumen 19 gebildet, das den Riss 18 vollständig auffüllt. Wasser und Sauerstoff sind in Fig. 5 beispielhaft durch ihre chemische Summenformel dargestellt. Das Wasser kann in Form von Feuchtigkeit zusammen mit dem Sauerstoff in der Umgebungsluft enthalten sein oder durch Niederschlag in den Riss 18 gelangen.

| Bezugszeichenliste | |
|---|---|
| 1 | Schichtförmiges Oberflächenschutzsystem |
| 2 | Betonbauteil |
| 3 | Matrixmaterial |
| 4 | Dichtmittel |
| 5 | zu schützende Oberfläche |
| 6 | Bewehrungssystem |
| 7 | Langfaser |
| 8 | Schüttgutmaterial |
| 9 | Beschichtung |
| 10 | Polymermatrix |
| 11 | Faserstrang |
| 12 | Knotenpunkt |
| 13 | Schichtdicke des schichtförmigen Oberflächenschutzsystems (1) |
| 14 | Kurzfaser |
| 15 | Tragschicht des Betonbauteils (2) |
| 16 | Hauptbewehrung der Tragschicht (15) |
| 17 | Teilvolumen |
| 18 | Riss |
| 19 | zusätzliches Festkörpervolumen |
| 20 | Bewehrungsstab |
| 21 | Faserrichtung |
| 22 | Vorsprung |
| X | Erste Haupterstreckungsrichtung |
| Y | Zweite Haupterstreckungsrichtung |
| Z | Dickenrichtung |

## Patentansprüche

1. Schichtförmiges Oberflächenschutzsystem (1) zum Schutz von Betonbauteilen vor eindringenden Flüssigkeiten und Chloriden mit folgenden Inhaltsstoffen:
• einem Matrixmaterial (3) - wie Beton oder Mörtel - , das vorzugsweise mineralische Stoffe umfasst,
• zumindest einem Dichtmittel (4), das zumindest in einem Teilvolumen (17) des Oberflächenschutzsystems (1) enthalten ist,
• wobei das zumindest eine Dichtmittel (4) derart beschaffen ist, dass es bei Kontakt mit typischen Umgebungsstoffen wie Wasser und/oder Luft das Festkörpervolumen des schichtförmigen Oberflächenschutzsystems (1) steigert, so dass das Dichtmittel (4) die Selbstheilung des Oberflächenschutzsystems (1) ermöglicht,
• und wobei das schichtförmige Oberflächenschutzsystem (1) sich vorwiegend in einer ersten Haupterstreckungsrichtung (X) und einer zweiten Haupterstreckungsrichtung (Y), die senkrecht zueinander sind und vorzugsweise parallel zu einer zu schützenden Oberfläche (5) verlaufen, erstreckt,
**gekennzeichnet durch**
• ein Bewehrungssystem (6), das Langfasern (7) umfasst, welche eine Länge von zumindest 100 mm, vorzugsweise jedoch zumindest 200 mm, aufweisen,
• wobei der Elastizitätsmodul zumindest einer der Langfasern (7) mindestens 70.000 MPa, vorzugsweise jedoch mindestens 200.000 MPa, beträgt,
• wobei das Bewehrungssystem (6) von dem Matrixmaterial (3) umschlossen ist,
• wobei das Bewehrungssystem (6) eine Polymermatrix (10) umfasst, die die Langfasern (7) umhüllt,
• und wobei das Dichtmittel (4) mit dem Matrixmaterial (3) vermengt ist.

2. Schichtförmiges Oberflächenschutzsystem (1) nach dem vorstehenden Anspruch
**dadurch gekennzeichnet, dass**
das schichtförmige Oberflächenschutzsystem (1) zumindest zwei vorzugsweise schichtförmige Teilvolumen (17, 17') mit unterschiedlicher Materialzusammensetzung aufweist.

3. Schichtförmiges Oberflächenschutzsystem (1) nach einem der vorstehenden Ansprüche
**dadurch gekennzeichnet, dass**
die Langfasern (7) sich im Wesentlichen in einer Ebene erstrecken, die von der ersten und der zweiten Haupterstreckungsrichtung (X, Y) aufgespannt wird.

4. Schichtförmiges Oberflächenschutzsystem (1) nach einem der vorstehenden Ansprüche
**dadurch gekennzeichnet, dass**
die Langfasern (7) an jeder Stelle ihrer Längserstreckung von einer zumindest 5 mm, vorzugsweise zumindest 10 mm, dicken Schicht des Matrixmaterials (3) umgeben sind.

5. Schichtförmiges Oberflächenschutzsystem (1) nach einem der vorstehenden Ansprüche
**dadurch gekennzeichnet, dass**
die Langfasern (7) eine Beschichtung (9), die Vorsprünge (23) umfasst, aufweisen.

6. Schichtförmiges Oberflächenschutzsystem (1) nach dem vorstehenden Anspruch
**dadurch gekennzeichnet, dass**
die Beschichtung (9) ein Schüttgutmaterial (8) enthält.

7. Schichtförmiges Oberflächenschutzsystem (1) nach dem vorstehenden Anspruch
**dadurch gekennzeichnet, dass**
das Schüttgutmaterial (8) Sand, vorzugsweise Quarzsand, umfasst.

8. Schichtförmiges Oberflächenschutzsystem (1) nach einem der Ansprüche 7 oder 8
**dadurch gekennzeichnet, dass**
das Schüttgutmaterial (8) eine Korngröße von 0,1 bis 1 mm aufweist.

9. Schichtförmiges Oberflächenschutzsystem (1) nach einem der vorstehenden Ansprüche
**dadurch gekennzeichnet, dass**
das Dichtmittel (4) bei Kontakt mit den typischen Umgebungsstoffen, vorzugsweise Wasser und/oder Sauerstoff, Kristalle bildet.

10. Schichtförmiges Oberflächenschutzsystem (1) nach einem der vorstehenden Ansprüche
**dadurch gekennzeichnet, dass**
das Dichtmittel (4) zumindest ein Bakterium umfasst, das bei Kontakt mit zumindest einem typischen Umgebungsstoff, einen Feststoff, vorzugsweise Calciumcarbonat, in dem schichtförmigen Oberflächenschutzsystem (1) bildet.

11. Schichtförmiges Oberflächenschutzsystem (1) nach dem vorstehenden Anspruch
**dadurch gekennzeichnet, dass**
das zumindest eine Bakterium aus einer der Gattungen Bacillus, Planococcus oder Sporosarcina stammt.

12. Schichtförmiges Oberflächenschutzsystem (1) nach einem der vorstehenden Ansprüche
**dadurch gekennzeichnet, dass**
die Langfasern (7) zumindest eine Kohlenstofffaser und/oder zumindest eine Glasfaser umfassen.

13. Schichtförmiges Oberflächenschutzsystem (1) nach einem der vorstehenden Ansprüche
**dadurch gekennzeichnet, dass**
die Polymermatrix (10) zumindest ein duromeres Harz, vorzugsweise Epoxidharz oder Vinylesterharz, enthält.

14. Schichtförmiges Oberflächenschutzsystem (1) nach einem der vorstehenden Ansprüche
**gekennzeichnet dadurch, dass**
• das Bewehrungssystem eine Vielzahl an Fasersträngen (11), die jeweils eine Vielzahl der Langfasern (7) umfassen, aufweist,
• wobei die Faserstränge (11) derart zueinander angeordnet sind, dass sich die Faserstränge (11) in Knotenpunkten (12) kreuzen
• und wobei die Faserstränge (11) in den Kontenpunkten (12) miteinander verbunden sind.

15. Schichtförmiges Oberflächenschutzsystem (1) nach einem der vorstehenden Ansprüche
**dadurch gekennzeichnet, dass**
das schichtförmige Oberflächenschutzsystem (1) eine Schichtdicke (13) von maximal 50 mm, vorzugsweise jedoch maximal 20 mm, aufweist, wobei die Schichtdicke (13) die Erstreckung des Oberflächenschutzsystems (1) in einer Dickenrichtung (Z), die senkrecht zu der ersten Haupterstreckungsrichtung (X) und der zweiten Haupterstreckungsrichtung (Y) verläuft, ist.

16. Schichtförmiges Oberflächenschutzsystem (1) nach einem der vorstehenden Ansprüche
**gekennzeichnet durch**
Kurzfasern (14), die eine Länge von maximal 50 mm aufweisen und mit dem Matrixmaterial (3) vermengt sind.

17. Bewehrtes Betonbauteil (2) mit folgenden Merkmalen:
• einer Tragschicht (15), die sich schichtförmig vorwiegend in einer ersten Haupterstreckungsrichtung (X) und einer zweiten Haupterstreckungsrichtung (Y) erstreckt und mineralische Stoffe umfasst,
• einer Hauptbewehrung (16), die vorzugsweise zumindest ein metallisches Material umfasst und vorzugsweise als Gitter in der Tragschicht (15) angeordnet ist,
• einem schichtförmigen Oberflächenschutzsystem (1), das ein Matrixmaterial (3) - wie Beton oder Mörtel - vorzugsweise aus mineralischen Stoffen umfasst, und das sich schichtförmig vorwiegend in der ersten und der zweiten Haupterstreckungsrichtung (X, Y) erstreckt,
• zumindest einem Dichtmittel (4), das zumindest in einem Teilvolumen (17) des schichtförmigen Oberflächenschutzsystems enthalten ist,
• wobei das zumindest eine Dichtmittel (4) derart beschaffen ist, dass es bei Kontakt mit typischen Umgebungsstoffen wie Wasser und/oder Luft das Festkörpervolumen des schichtförmigen Oberflächenschutzsystems (1) steigert, so dass das Dichtmittel (4) die Selbstheilung des Oberflächenschutzsystems (1) ermöglicht,
**gekennzeichnet durch**
ein Bewehrungssystem (6), das in dem schichtförmigen Oberflächenschutzsystem (1) angeordnet und von dem Matrixmaterial (3) umschlossen ist, und das Langfasern (7) umfasst, welche zumindest eine Länge von 100 mm aufweisen, wobei der Elastizitätsmodul zumindest einer der Langfasern (7) mindestens 70.000 MPa, vorzugsweise jedoch mindestens 200.000 MPa, beträgt,
wobei das Bewehrungssystem (6) eine Polymermatrix (10) umfasst, die die Langfasern (7) umhüllt,
und wobei das Dichtmittel (4) mit dem Matrixmaterial (3) vermengt ist.

18. Bewehrtes Betonbauteil (2) nach dem vorstehenden Anspruch
**dadurch gekennzeichnet, dass**
zwischen der Tragschicht (15) und dem Matrixmaterial (3) ein vorzugsweise schichtförmiges Teilvolumen (17') angeordnet ist, das das zumindest eine Dichtmittel (4) enthält.

19. Verfahren zum Aufbringen eines schichtförmigen Oberflächenschutzsystems (1) gemäß einem der Ansprüche 1 bis 16 mit folgenden Verfahrensschritten:
• Aufbringen zumindest eines ersten Anteils eines Matrixmaterials (3) - wie Beton oder Mörtel -, das vorzugsweise mineralische Stoffe umfasst, auf zumindest einer zu schützenden Oberfläche (5) derart, dass eine sich vorwiegend in einer ersten Haupterstreckungsrichtung X und einer zweiten Haupterstreckungsrichtung Y, die senkrecht zueinander und parallel zu der zu schützenden Oberfläche (5) verlaufen, erstreckende Schicht gebildet wird,
• Aufbringen zumindest eines Dichtmittels (4),
• wobei das zumindest eine Dichtmittel (4) derart beschaffen ist, dass es bei Kontakt mit typischen Umgebungsstoffen wie Wasser und/oder Luft das Festkörpervolumen des schichtförmigen Oberflächenschutzsystems (1) steigert, so dass das Dichtmittel (4) die Selbstheilung des Oberflächenschutzsystems (1) ermöglicht,
**dadurch gekennzeichnet,**
• **dass** ein Bewehrungssystem (6), das Langfasern (7) umfasst, welche zumindest eine Länge von 100 mm aufweisen, in das Matrixmaterial (3) eingelegt wird, wobei das Bewehrungssystem (6) vorzugsweise vollständig von dem Matrixmaterial (3) umgeben ist,
• **dass** der Elastizitätsmodul zumindest einer der Langfasern (7) mindestens 70.000 MPa, vorzugsweise jedoch mindestens 200.000 MPa, beträgt,
• **und dass** das Matrixmaterial (3) anschließend ausgehärtet wird.

20. Verfahren nach dem vorstehenden Anspruch
**dadurch gekennzeichnet, dass**
die Langfasern (7) des Bewehrungssystems (6) vor dem Einlegen des Bewehrungssystems (6) in das Matrixmaterial (3) zumindest teilweise mit zumindest einem Schüttgutmaterial (8) beschichtet werden.

21. Verfahren nach dem vorstehenden Anspruch
**dadurch gekennzeichnet, dass**
die Langfasern (7) zum Beschichten mit einer aushärtbaren Polymermatrix (10), die vorzugsweise einen Duroplast umfasst, getränkt werden.

22. Verfahren nach einem der vorstehenden Ansprüche 19 bis 21
**dadurch gekennzeichnet,**
**dass** das Dichtmittel (4) vor dem Aufbringen des zumindest einen ersten Anteils des Matrixmaterials (3) mit dem Matrixmaterial (3) vermengt wird
**und dass** das Dichtmittel (4) gemeinsam mit dem Matrixmaterial (3) aufgebracht wird.

23. Verfahren nach einem der vorstehenden Ansprüche 19 bis 22
**dadurch gekennzeichnet, dass**
nach dem Einlegen des Bewehrungssystems (6) in das Matrixmaterial (3) ein zweiter Anteil des Matrixmaterials (3) auf dem ersten Anteil des Matrixmaterials (3) und dem Bewehrungssystem (6) aufgebracht wird.

24. Verfahren nach einem der vorstehenden Ansprüche 19 bis 23
**dadurch gekennzeichnet,**
• **dass** vor dem Aufbringen des zumindest einen ersten Anteils des Matrixmaterials (3) Material eines Betonbauteils (2) zumindest teilweise abgetragen wird,
• **und dass** durch den Abtrag dieses Materials die zu schützende Oberfläche (5) erzeugt wird.

## Claims

1. Layered surface protection system (1) for the protection of concrete components against penetrating liquids and chlorides with the following ingredients:
• a matrix material (3) - such as concrete or mortar - which preferably comprises mineral materials,
• at least one sealing agent (4), which is contained in at least one partial volume (17) of the surface protection system (1),
• wherein the at least one sealing agent (4) increases the solid volume of the layered surface protection system (1) on contact with typical environmental substances such as water and/or air, such that the sealing agent (4) enables self-healing of the surface protection system (1),
• and wherein the layered surface protection system (1) extends predominantly in a first main direction of extension (X) and a second main direction of extension (Y), which are perpendicular to each other and preferably extend parallel to a surface to be protected (5),
**characterized by**
• a reinforcement system (6) comprising long fibers (7) which have a length of at least 100 mm, but preferably at least 200 mm,
• wherein the Young's modulus of at least one of the long fibers (7) is at least 70,000 MPa, but preferably at least 200,000 MPa,
• wherein the reinforcement system (6) is enclosed by the matrix material (3),
• wherein the reinforcement system (6) comprises a polymer matrix (10) encasing the long fibers (7),
• and wherein the sealing agent (4) is mixed with the matrix material (3).

2. Layered surface protection system (1) according to the preceding claim
**characterized in that**
the layered surface protection system (1) comprises at least two, preferably layer-shaped, partial volumes (17, 17') with different material compositions.

3. Layered surface protection system (1) according to one of the preceding claims
**characterized in that**
the long fibers (7) extend substantially in a plane spanned by the first and second main directions of extension (X, Y).

4. Layered surface protection system (1) according to one of the preceding claims
**characterized in that**
the long fibers (7) are enclosed at each point of their longitudinal extension by a layer of the matrix material (3) having a thickness of at least 5 mm, preferably at least 10 mm.

5. Layered surface protection system (1) according to one of the preceding claims
**characterized in that**
the long fibers (7) have a coating (9) comprising protrusions (23).

6. Layered surface protection system (1) according to the preceding claim
**characterized in that**
the coating (9) contains a bulk material (8).

7. Layered surface protection system (1) according to the preceding claim
**characterized in that**
the bulk material (8) comprises sand, preferably quartz sand.

8. Layered surface protection system (1) according to one of claims 7 or 8
**characterized in that**
the bulk material (8) has a grain size of 0.1 to 1 mm.

9. Layered surface protection system (1) according to one of the preceding claims
**characterized in that**
the sealing agent (4) forms crystals on contact with the typical environmental substances, preferably water and/or oxygen.

10. Layered surface protection system (1) according to one of the preceding claims
**characterized in that**
the sealing agent (4) comprises at least one bacterium which, in contact with at least one typical environmental substance, forms a solid, preferably calcium carbonate, in the layered surface protection system (1).

11. Layered surface protection system (1) according to the preceding claim
**characterized in that**
at least one bacterium comes from one of the genera Bacillus, Planococcus or Sporosarcina.

12. Layered surface protection system (1) according to one of the preceding claims
**characterized in that**
the long fibers (7) comprise at least one carbon fiber and/or at least one glass fiber.

13. Layered surface protection system (1) according to one of the preceding claims
**characterized in that**
the polymer matrix (10) contains at least one thermoset resin, preferably epoxy resin or vinyl ester resin.

14. Layered surface protection system (1) according to one of the preceding claims
**characterized in that**
• the reinforcement system (6) comprises a plurality of fiber strands (11), each comprising a plurality of the long fibers (7),
• wherein the fiber strands (11) are arranged relative to one another in such a way that the fiber strands (11) intersect at nodes (12)
• and wherein the fiber strands (11) are connected to each other at the nodes (12).

15. Layered surface protection system (1) according to one of the preceding claims
**characterized in that**
the layered surface protection system (1) has a layer thickness (13) of at most 50 mm, but preferably at most 20 mm, wherein the layer thickness (13) is the extension of the surface protection system (1) in a thickness direction (Z) which runs perpendicular to the first main direction of extension (X) and the second main direction of extension (Y).

16. Layered surface protection system (1) according to one of the preceding claims
**characterized by**
short fibers (14), which have a length of at most 50 mm and are mixed with the matrix material (3).

17. Reinforced concrete component (2) with the following features:
• a base layer (15) which extends in layers predominantly in a first main direction of extension (X) and a second main direction of extension (Y) and comprises mineral materials,
• a main reinforcement (16), which preferably comprises at least a metallic material and is preferably arranged as a grid in the base layer (15),
• a layered surface protection system (1) which comprises a matrix material (3) - such as concrete or mortar - preferably made of mineral materials, and which extends as a layer predominantly in the first and second main directions of extension (X, Y),
• at least one sealing agent (4), which is contained in at least one partial volume (17) of the layered surface protection system,
• wherein the at least one sealing agent (4) increases the solid volume of the layered surface protection system (1) on contact with typical environmental substances such as water and/or air, such that the sealing agent (4) enables self-healing of the surface protection system (1),
**characterized by**
a reinforcement system (6) which is arranged in the layered surface protection system (1) and is enclosed by the matrix material (3), and which comprises long fibers (7) which have a length of at least 100 mm, wherein the Young's modulus of at least one of the long fibers (7) is at least 70,000 MPa, but preferably at least 200,000 MPa,
wherein the reinforcement system (6) comprises a polymer matrix (10) encasing the long fibers (7),
and wherein the sealing agent (4) is mixed with the matrix material (3).

18. Reinforced concrete component (2) according to the preceding claim
**characterized in that**
a preferably layer-shaped partial volume (17') containing the at least one sealing agent (4) is arranged between the base layer (15) and the matrix material (3).

19. Method for applying a layered surface protection system (1) according to any one of claims 1 to 16, comprising the following method steps:
• application of at least a first portion of a matrix material (3) - such as concrete or mortar - which preferably comprises mineral materials, to at least one surface (5) to be protected in such a way that a layer extending predominantly in a first main direction of extension X and a second main direction of extension Y, which extend perpendicular to one another and parallel to the surface (5) to be protected, is formed,
• application of at least one sealing agent (4),
• wherein the at least one sealing agent (4) increases the solid volume of the layered surface protection system (1) on contact with typical environmental substances such as water and/or air, such that the sealing agent (4) enables self-healing of the surface protection system (1),
**characterized in**
• **that** a reinforcement system (6) comprising long fibers (7) which have a length of at least 100 mm is inserted into the matrix material (3), wherein preferably the reinforcement system (6) is completely surrounded by the matrix material (3),
• **that** the Young's modulus of at least one of the long fibers (7) is at least 70,000 MPa, but preferably at least 200,000 MPa,
• **and that** the matrix material (3) is subsequently cured.

20. Method according to the preceding claim
**characterized in that**
the long fibers (7) of the reinforcement system (6) are at least partially coated with at least one bulk material (8) before the reinforcement system (6) is inserted into the matrix material (3).

21. Method according to the preceding claim
**characterized in that**
the long fibers (7) are impregnated with a curable polymer matrix (10), which preferably comprises a thermoset resin, for coating.

22. Method according to any one of the preceding claims 19 to 21
**characterized in**
**that** the sealing agent (4) is mixed with the matrix material (3) before the at least one first portion of the matrix material (3) is applied
**and that** the sealing agent (4) is applied together with the matrix material (3).

23. Method according to any one of the preceding claims 19 to 22
**characterized in that**
after inserting the reinforcement system (6) into the matrix material (3), a second portion of the matrix material (3) is applied onto the first portion of the matrix material (3) and the reinforcement system (6).

24. Method according to any one of the preceding claims 19 to 23
**characterized in**
• **that** material of a concrete component (2) is at least partially removed before the at least one first portion of the matrix material (3) is applied,
• **and that** the surface to be protected (5) is produced by removing this material.

## Revendications

1. Système en couches (1) de protection de surface, destiné à la protection d'éléments de construction en béton contre des liquides et chlorures pénétrants, comportant les constituants suivants :
• un matériau de matrice (3) - tel que du béton ou du mortier - qui comprend de préférence des matières minérales,
• au moins un agent d'étanchéité (4) qui est contenu au moins dans un volume partiel (17) du système (1) de protection de surface,
• ledit au moins un agent d'étanchéité (4) étant de nature telle qu'au contact avec des substances environnementales types, telles que l'eau ou l'air, il augmente le volume de corps solides du système en couches (1) de protection de surface, de sorte que l'agent d'étanchéité (4) permet l'auto-régénération du système (1) de protection de surface,
• et dans lequel le système en couches (1) de protection de surface s'étend principalement dans une première direction d'extension principale (X) et une seconde direction d'extension principale (Y) qui sont perpendiculaires l'une à l'autre et s'étendent de préférence parallèlement à une surface (5) à protéger, **caractérisé par**
• un système d'armature (6) qui comprend des fibres longues (7) qui ont une longueur d'au moins 100 mm, mais de préférence d'au moins 200 mm,
• le module d'élasticité d'au moins une des fibres longues (7) valant au moins 70 000 MPa, mais de préférence au moins 200 000 MPa,
• le système d'armature (6) étant entouré du matériau de matrice (3),
• le système d'armature (6) comprenant une matrice polymère (10) qui entoure les fibres longues (7),
• et l'agent d'étanchéité (4) étant mélangé avec le matériau de matrice (3).

2. Système en couches (1) de protection de surface selon la revendication précédente
**caractérisé en ce que**
le système en couches (1) de protection de surface présente au moins deux volumes partiels (17, 17') de préférence en forme de couches, à composition de matière différente.

3. Système en couches (1) de protection de surface selon l'une quelconque des revendications précédentes
**caractérisé en ce que**
les fibres longues (7) s'étendent essentiellement dans un plan qui s'étend de la première et de la seconde direction d'extension principale (X, Y).

4. Système en couches (1) de protection de surface selon l'une quelconque des revendications précédentes
**caractérisé en ce que**
les fibres longues (7) sont entourées en tout point de leur extension longitudinale par une couche du matériau de matrice (3) d'une épaisseur d'au moins 5 mm, de préférence d'au moins 10 mm.

5. Système en couches (1) de protection de surface selon l'une quelconque des revendications précédentes
**caractérisé en ce que**
les fibres longues (7) présentent un revêtement (9) qui comprend des saillies (23).

6. Système en couches (1) de protection de surface selon la revendication précédente
**caractérisé en ce que**
le revêtement (9) contient une matière en vrac (8).

7. Système en couches (1) de protection de surface selon la revendication précédente
**caractérisé en ce que**
la matière en vrac (8) comprend du sable, de préférence du sable siliceux.

8. Système en couches (1) de protection de surface selon l'une quelconque des revendications 7 et 8
**caractérisé en ce que**
la matière en vrac (8) présente une taille de grain de 0,1 à 1 mm.

9. Système en couches (1) de protection de surface selon l'une quelconque des revendications précédentes
**caractérisé en ce que**
lors de contact avec des substances environnementales types, de préférence l'eau et/ou l'oxygène, l'agent d'étanchéité (4) forme des cristaux.

10. Système en couches (1) de protection de surface selon l'une quelconque des revendications précédentes
**caractérisé en ce que**
l'agent d'étanchéité (4) comprend au moins une bactérie qui, lors de contact avec au moins une substance environnementale type, forme un solide, de préférence du carbonate de calcium, dans le système en couches (1) de protection de surface.

11. Système en couches (1) de protection de surface selon la revendication précédente
**caractérisé en ce que**
ladite au moins une bactérie appartient à l'un des genres Bacillus, Planococcus ou Sporosarcina.

12. Système en couches (1) de protection de surface selon l'une quelconque des revendications précédentes
**caractérisé en ce que**
les fibres longues (7) comprennent au moins une fibre de carbone et/ou au moins une fibre de verre.

13. Système en couches (1) de protection de surface selon l'une quelconque des revendications précédentes
**caractérisé en ce que**
la matrice polymère (10) contient au moins une résine thermodurcissable, de préférence une résine époxydique ou une résine ester vinylique.

14. Système en couches (1) de protection de surface selon l'une quelconque des revendications précédentes
**caractérisé en ce que**
• le système d'armature comprend une pluralité de faisceaux (11) de fibres, qui comprennent chacun une pluralité desdites fibres longues (7),
• les faisceaux (11) de fibres étant disposés les uns par rapport aux autres de façon telle que les faisceaux (11) de fibres se croisent en des points de jonction (12)
• et les faisceaux (11) de fibres étant reliés entre eux dans les points de jonction (12).

15. Système en couches (1) de protection de surface selon l'une quelconque des revendications précédentes
**caractérisé en ce que**
le système en couches (1) de protection de surface présente une épaisseur (13) de couche d'au maximum 50 mm, mais de préférence d'au maximum 20 mm, l'épaisseur (13) de couche étant l'extension du système (1) de protection de surface dans une direction d'épaisseur (Z) qui s'étend perpendiculairement à la première direction d'extension principale (X) et à la deuxième direction d'extension principale (Y).

16. Système en couches (1) de protection de surface selon l'une quelconque des revendications précédentes
**caractérisé par**
des fibres courtes (14) qui présentent une longueur d'au maximum 50 mm et sont mélangées avec le matériau de matrice (3).

17. Élément de construction en béton armé (2) présentant les caractéristiques suivantes :
• une couche de support (15) qui s'étend en couche principalement dans une première direction d'extension principale (X) et une seconde direction d'extension principale (Y) et comprend des matières minérales,
• une armature principale (16) qui comprend de préférence au moins un matériau métallique et est de préférence disposée sous forme de treillis dans la couche de support (15),
• un système en couches (1) de protection de surface, qui comprend un matériau de matrice (3) - tel que du béton ou du mortier - de préférence à base de matières minérales, et qui s'étend en forme de couche principalement dans la première et la seconde direction d'extension principale (X, Y),
• au moins un agent d'étanchéité (4) qui est contenu au moins dans un volume partiel (17) du système en couches de protection de surface,
• ledit au moins un agent d'étanchéité (4) étant de nature telle qu'au contact avec des substances environnementales types, telles que l'eau ou l'air, il augmente le volume de corps solides du système en couches (1) de protection de surface, de sorte que l'agent d'étanchéité (4) permet l'auto-régénération du système (1) de protection de surface,
**caractérisé par**
un système d'armature (6) qui est disposé dans le système en couches (1) de protection de surface et est entouré par le matériau de matrice (3), et qui comprend des fibres longues (7) qui présentent au moins une longueur de 100 m, le module d'élasticité d'au moins une des fibres longues (7) valant au moins 70 000 MPa, mais de préférence au moins 200 000 MPa,
le système d'armature (6) comprenant une matrice polymère (10) qui entoure les fibres longues (7),
et l'agent d'étanchéité (4) étant mélangé avec le matériau de matrice (3).

18. Élément de construction en béton armé (2) selon la revendication précédente
**caractérisé en ce que**
entre la couche de support (15) et le matériau de matrice (3) est disposé un volume partiel (17'), de préférence en forme de couche, qui contient ledit au moins un moyen d'étanchéité (4).

19. Procédé pour l'application d'un système en couches (1) de protection de surface selon l'une quelconque des revendications 1 à 16, comportant les étapes de procédé suivantes :
• application d'au moins une première partie d'un matériau de matrice (3) - tel que du béton ou du mortier - qui comprend de préférence des matières minérales, sur au moins une surface (5) à protéger, de sorte qu'est formée une couche s'étendant principalement dans une première direction d'extension principale X et une seconde direction d'extension principale Y, qui sont perpendiculaires l'une à l'autre et s'étendent parallèlement à la surface (5) à protéger,
• application d'au moins un agent d'étanchéité (4),
• ledit au moins un agent d'étanchéité (4) étant de nature telle qu'au contact avec des substances environnementales types, telles que l'eau ou l'air, il augmente le volume de corps solides du système en couches (1) de protection de surface, de sorte que l'agent d'étanchéité (4) permet l'auto-régénération du système (1) de protection de surface,
**caractérisé**
• **en ce qu'**un système d'armature (6), qui comprend des fibres longues (7) qui présentent au moins une longueur de 100 mm, est inséré dans le matériau de matrice (3), le système d'armature (6) étant de préférence entièrement entouré du matériau de matrice (3),
• **en ce que** le module d'élasticité d'au moins une des fibres longues (7) vaut au moins 70 000 MPa, mais de préférence au moins 200 000 MPa,
• et **en ce que** le matériau de matrice (3) est ensuite durci.

20. Procédé selon la revendication précédente
**caractérisé en ce que**
les fibres longues (7) du système d'armature (6) sont au moins partiellement revêtues d'au moins un matériau en vrac (8) avant la mise en place du système d'armature (6) dans le matériau de matrice (3).

21. Procédé selon la revendication précédente
**caractérisé en ce que**
les fibres longues (7) sont pour le revêtement imprégnées avec une matrice polymère durcissable (10) qui comprend de préférence un thermodurcissable.

22. Procédé selon l'une quelconque des revendications 19 à 21 précédentes
caractérisé
l'agent d'étanchéité (4) est mélangé avec le matériau de matrice (3) avant l'application de ladite au moins une première partie du matériau de matrice (3)
et en ce que l'agent d'étanchéité (4) est appliqué conjointement avec le matériau de matrice (3).

23. Procédé selon l'une quelconque des revendications 19 à 22 précédentes
**caractérisé**
**en ce qu'**après la mise en place du système d'armature (6) dans le matériau de matrice (3), une deuxième partie du matériau de matrice (3) est appliquée sur la première partie du matériau de matrice (3) et le système d'armature (6).

24. Procédé selon l'une quelconque des revendications 19 à 23 précédentes
**caractérisé**
• **en ce qu'**avant l'application de ladite au moins une première partie du matériau de matrice (3), du matériau d'un élément de construction en béton (2) est au moins partiellement éliminé,
• et **en ce que** la surface (5) à protéger est produite par l'élimination de ce matériau.
